# EUROPEAN PATENT SPECIFICATION

(11) **EP 3 992 740 B1**
(45) Date of publication and mention of the grant of the patent: **31.12.2025**
(21) Application number: 20833158.7
(22) Date of filing: 29.05.2020
(51) Int. Cl.: G05B 23/02, G05B 17/02, G06N 20/00

(54) **PREDICTION SYSTEM**
VORHERSAGESYSTEM
SYSTÈME DE PRÉDICTION

(30) Priority: 28.06.2019 JP 2019122012
(43) Date of publication of application: 04.05.2022
(73) Proprietor: SUMITOMO HEAVY INDUSTRIES, LTD., Tokyo 141-6025 (JP)
(72) Inventor: AKEDO, Yutaka, Yokosuka-shi, Kanagawa 237-8555 (JP); KADOWAKI, Masanori, Yokosuka-shi, Kanagawa 237-8555 (JP)
(74) Representative: Louis Pöhlau Lohrentz
(86) International application number: PCT/JP2020/021298
(87) International publication number: WO 2020/261875

(56) References cited:
- WO-A1-2018/061842
- WO-A1-2018/106150
- WO-A1-2018/146768
- JP-A- 2001 101 235
- JP-A- 2006 072 408
- JP-B2- 2 758 976

## Description

### Technical Field

Certain embodiments of the invention relate to a prediction system that predicts an operation state of a target device.

### Background Art

In the related art, a system for predicting the future behavior of a target device and a component has been proposed based on data on an operation of a target device such as a plant.

For example, in PTL 1, a characteristic change prediction system for generating a neural circuit model by learning information on changes in the characteristics of various components in a plurality of plants over time, and predicting a future characteristic change pattern of the component over time based on the similarity with each of a plurality of characteristic change patterns over time is disclosed. In addition, for example, in PTL 2, a system in which a similar plant is selected from a plurality of plants and a specific performance index is monitored from operation data is disclosed. PTL 3 discloses an abnormality detection program, an abnormality detection method, and an abnormality detection apparatus which detects presence/absence of abnormality of a monitoring target apparatus. PTL 4 discloses an on-line monitoring and prediction system for determining deviations in the behavior of a monitored object.

### Citation List

### Patent Literature

[PTL 1] Japanese Patent No. 2758976
[PTL 2] Japanese Unexamined Patent Publication No. 2004-290774
[PTL 3] International Patent Publication No. WO 2018/061842
[PTL 4] International Patent Publication No. WO 2018/106150

### Summary of Invention

### Technical Problem

However, the future behavior of the target device such as a plant may be significantly affected not only by the past operation state but also by factors such as the specifications of the target device and the environment in which the target device is placed. It can be said that these factors are information indicating a category to which the target device belongs when the target device is classified according to various criteria, that is, attribute information.

Therefore, an object of the embodiments of the invention is to provide a prediction system capable of predicting an operation state of a target device in the future in consideration of attribute information of the target device.

### Solution to Problem

According to aspects of the invention, a system according to claim 1, a method according to claim 12 and a program according to claim 13 are provided.

According to the aspects, the history of the operation state of the target device that satisfies the attribute information filter condition specifying the attribute information of the target device is extracted from the history of the operation state of each of the plurality of target devices, and the operation state of the prediction target device is predicted based on the history of the operation state. Therefore, it is possible to predict the future of the operation state in consideration of the attribute information of the target device.

### Advantageous Effects of Invention

According to the embodiments of the invention, it is possible to provide a prediction system capable of predicting an operation state of a target device in the future in consideration of attribute information of the target device.

### Brief Description of Drawings

Fig. 1 is a schematic diagram illustrating an example of a configuration of a prediction system 1 according to the embodiment.
Fig. 2 is a table illustrating an example of an attribute information table.
Fig. 3 is a graph illustrating an example of an operation state history table.
Fig. 4 is a flow chart illustrating an example of an operation flow by the prediction system 1 according to the embodiment.
Fig. 5 is a view illustrating an example of a screen 500 displayed on a display unit 13.
Fig. 6A is a view illustrating an example of a screen 600 displayed on the display unit 13.
Fig. 6B is a view illustrating an example of a screen 700 displayed on the display unit 13.

### Description of Embodiments

Preferred embodiments of the embodiments of the invention will be described with reference to the accompanying drawings (in each figure, those having the same reference numeral have the same or a similar configuration).

### (1) Configuration

### (1-1) Prediction System 1

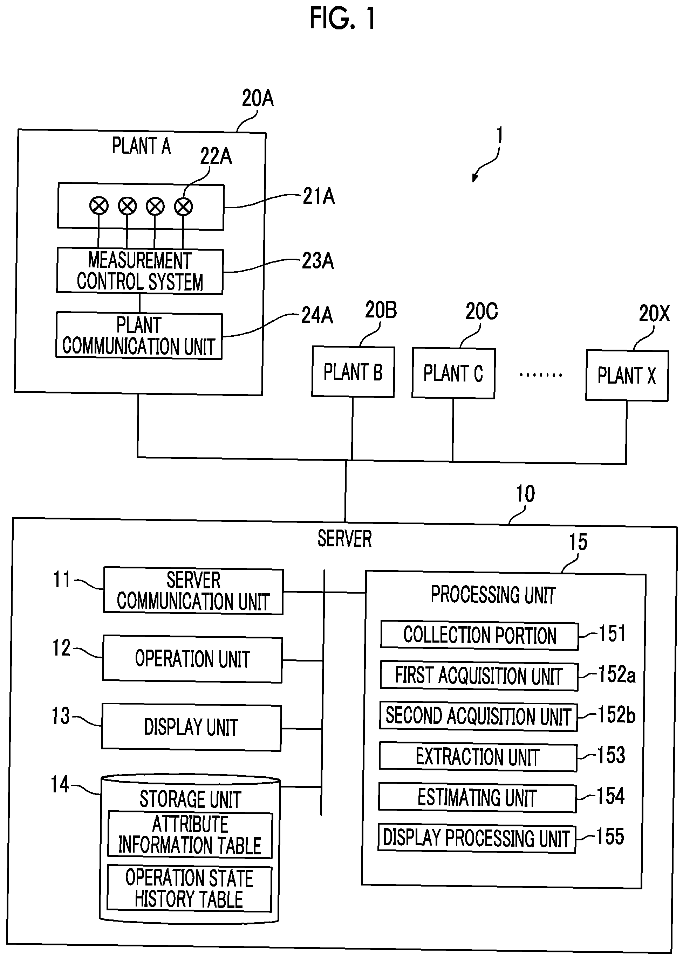

Fig. 1 is a schematic diagram illustrating an example of a configuration of a prediction system 1 according to the embodiments of the invention. As illustrated in Fig. 1, the prediction system 1 includes a server 10 and at least one plant 20. Here, the plant 20 is an example of a "target device". The type of the plant 20 is not particularly limited, and may include an oil plant, a chemical plant, a pharmaceutical plant, a food plant, a paper manufacturing plant, and the like. In addition, the elements constituting the plant 20 are not particularly limited, and may include storage equipment for fuel and raw materials, equipment that uses fuel and raw materials, or treats and processes fuel and raw materials, and a piping system connecting each element. The target device to which the prediction system 1 can be applied is not limited to various plants and may be any device such as an industrial machine.

The server 10 and each plant 20 are connected to each other so as to be able to communicate with each other via a communication network such as Internet. When distinguishing each plant 20, each plant 20 may be referred to as "plant 20A", "plant 20B", and the like, and when each plant 20 is generically referred to, each plant 20 may be simply referred to as "plant 20".

### (1-2) Server 10

The server 10 is an example of an information processing device that manages a history of an operation state (operation state history) of each plant 20. In this example, the server 10 is configured to include, for example, one information processing device, and the server 10 may be configured to include a plurality of information processing devices. Here, the information processing device is a device capable of executing various types of information processing, such as a computer provided with a processor and a storage area. Each part illustrated in Fig. 1 can be realized, for example, by using a storage area or by executing a program stored in the storage area by a processor.

The server 10 includes, for example, a server communication unit 11, an operation unit 12, a display unit 13, a storage unit 14, and a processing unit 15.

The server communication unit 11 includes a communication interface circuit for connecting the server 10 to the communication network. The server communication unit 11 supplies data such as a history of an operation state (operation state history) received from each plant 20 to the processing unit 15.

The operation unit 12 may be any device as long as the server 10 can be operated, and is, for example, a touch panel, a key button, or the like. The user can input characters, numbers, symbols, and the like using the operation unit 12. When the operation unit 12 is operated by the user, the operation unit 12 generates a signal corresponding to the operation. The generated signal is supplied to the processing unit 15 as a user's instruction.

The display unit 13 may be any device as long as the display unit 13 can display a picture, an image, or the like, and is, for example, a liquid crystal display, an organic electro-luminescence (EL) display, or the like. The display unit 13 displays a picture corresponding to picture data supplied from the processing unit 15, an image corresponding to image data, and the like.

The storage unit 14 includes, for example, at least one of a semiconductor memory, a magnetic disk device, and an optical disk device. The storage unit 14 stores a driver program, an operating system program, an application program, data, and the like used for processing by the processing unit 15. For example, the storage unit 14 stores a communication device driver program or the like that controls the server communication unit 11 as a driver program. The various programs may be installed in the storage unit 14 from a computer-readable portable recording medium such as a CD-ROM or a DVD-ROM using a known setup program or the like.

The storage unit 14 stores, as data, an attribute information table, an operation state history table, and the like, which will be described later. In addition, the storage unit 14 stores display data of various screens as data. Furthermore, the storage unit 14 temporarily stores data related to predetermined processing.

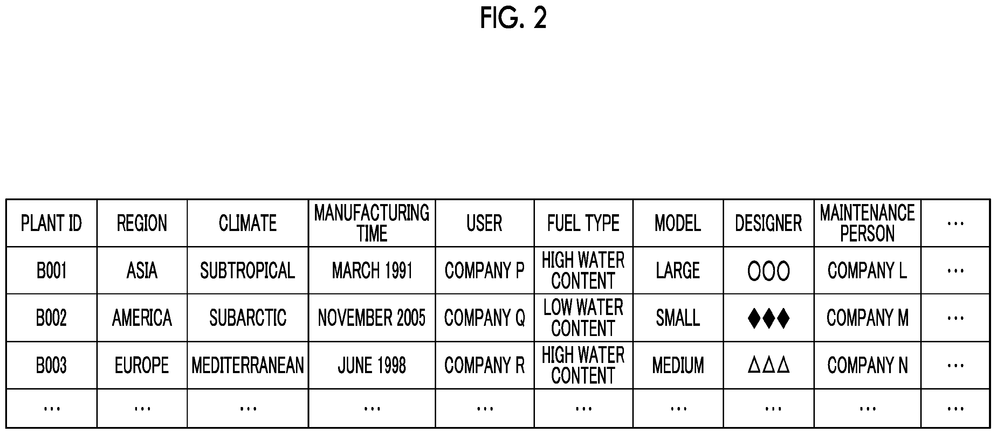

Fig. 2 is a table illustrating an example of an attribute information table. The attribute information table is a table for managing attribute information for each plant. Here, the attribute information of the plant 20 is, for example, information indicating a category (attribute) to which the plant 20 belongs when the plant 20 is classified according to various criteria. The "attribute" may be referred to as an "external state", an "incidental state", an "external incidental state", or the like.

In the attribute information table, for example, attribute information of the plant 20 such as "plant ID", "region", "climate", "manufacturing time", "user", "fuel type", "model", "designer", "maintenance person", and the like is recorded. The "plant ID" is identification information (ID) for identifying the plant 20. The "region" is information indicating the region where the plant 20 is installed. The "region" is information indicating the climate of the region where the plant 20 is installed. The "manufacturing time" is information indicating the time when the plant 20 was manufactured, and may be expressed by, for example, a year, a year and month, a year, month, and date, or the like. The "model" is a type of the plant 20 as a machine, and for example, the model, method, and type, and "designer" are information indicating a person (individual, company, and the like) who designed the plant 20. The "maintenance person" is information indicating a person (individual, company, and the like) who performs maintenance of the plant 20. The attribute information table is not limited to the above-described item, and may include other attribute information.

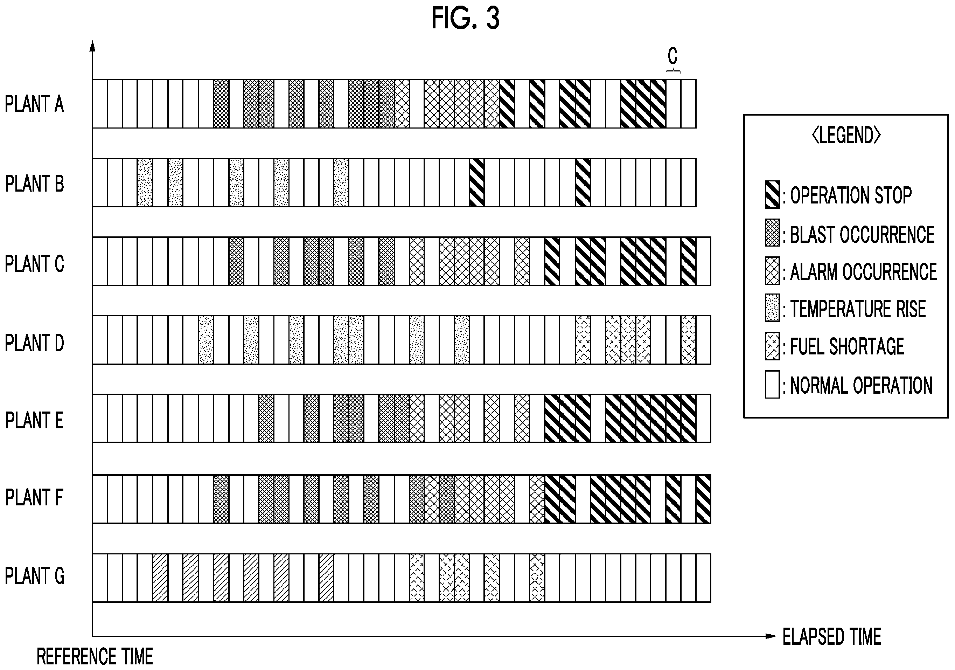

Fig. 3 is a graph illustrating an example of an operation state history table. The operation state history table is a table for managing the operation state history for each plant 20. As illustrated in Fig. 3, in the operation state history table, the history of the operation state is represented by a plurality of rectangular cells C for each plant. In the operation state history table, the horizontal axis indicates an elapsed time from a reference time. Here, the reference time can be randomly set by the administrator or the like, and may be, for example, the start of operation, the start-up of the plant 20, or the like (including restart after a pause period for inspection, in addition to initial start-up). In addition, in the operation state history table, each cell C indicates the operation state of the plant 20 in the elapsed time (each cell C may be at one time point or may be a period having a predetermined width), and the type of the operation state is distinguished by the pattern in the cell C. The length of time possessed by one cell C can be randomly set in units of, for example, seconds, minutes, hours, days, weeks, and the like. The operation states are not limited to these, and may include, for example, normal operation, an accident occurrence (during accidents such as fuel shortage, appearance of foreign matter, temperature rise, temperature drop, cooler trip, fuel system trip, blast, and blackout), an alarm occurrence (during other alarms such as balancing shoot level alarm), an operation stop, and an occurrence of any other event.

The processing unit 15 includes one or more processors and peripheral circuits thereof. The processing unit 15 comprehensively controls the overall operation of the server 10, and is, for example, a central processing unit (CPU). The processing unit 15 controls the operation of the server communication unit 11 and the like so that various processing of the server 10 is executed by an appropriate procedure based on the program and the like stored in the storage unit 14. The processing unit 15 executes processing based on a program (operating system program, driver program, application program, and the like) stored in the storage unit 14. In addition, the processing unit 15 can execute a plurality of programs (application programs and the like) in parallel.

The processing unit 15 includes a collection portion 151, a first acquisition unit 152a, a second acquisition unit 152b, an extraction unit 153, an estimating unit 154, a display processing unit 155, and the like. Each of these units included in the processing unit 15 is a functional module mounted by a program executed on the processor included in the processing unit 15. Alternatively, each of these units included in the processing unit 15 may be mounted on the server 2 as an independent integrated circuit, microprocessor, or firmware.

The collection portion 151 collects (receives) the operation state history of the plant 20 from each plant 20 and records the operation state history in the operation state history table stored in the storage unit 14 or the like. The timing at which the collection or recording processing of the collection portion 151 is executed is not particularly limited, and may be, for example, a predetermined periodic or aperiodic timing, or when an administrator or the like inputs a command for executing the processing via the operation unit 12.

A reception unit 152 receives, for example, various filter conditions input by the user via the operation unit 12. Here, the filter condition is a condition that the plant 20 or the operation state history of the plant 20 is required to satisfy in order to extract (filter) a desired operation state history from the operation state history table.

The first acquisition unit 152a acquires the attribute information filter condition, which is a condition related to the attribute information of the plant 20. Here, the attribute information filter condition is a condition that the plant 20 is required to satisfy in order to extract (filter) a desired operation state history from the operation state history table, and is a condition in which at least one attribute information included in the attribute information of the prediction target device is specified. The attribute information included in the attribute information filter condition may be, for example, the attribute information listed in the above description of Fig. 2 described above, or any other attribute information. The first acquisition unit 152a acquires the attribute information filter condition, for example, by receiving the attribute information filter condition input by the user via the operation unit 12.

The second acquisition unit 152b acquires the operation state filter condition which is a condition related to the operation state of the plant 20. Here, the operation state filter condition is a condition that the operation state history of the plant 20 is required to satisfy in order to extract (filter) a desired operation state history from the operation state history table. In the operation state filter condition, at least one operation state included in the operation state history of the prediction target device is specified. In addition, in the operation state filter condition, the order of occurrence of each operation state may be specified.

The extraction unit 153 extracts the operation state history of the plant 20 that satisfies the attribute information filter condition received by the first acquisition unit 152a and the operation state filter condition received by the second acquisition unit 152b with reference to the storage unit 14. In addition, when extracting the operation state history according to the above-described operation state filter condition, the extraction unit 153 only extracts when the duration time of the operation state (when the operation state is intermittent, the duration time may be the total time of the history of each operation state) specified as the operation state filter condition is equal to or longer than a predetermined threshold.

The estimating unit 154 predicts the operation state of the prediction target device (plant) based on the operation state history extracted by the extraction unit 153. A method of predicting the operation state by the estimating unit 154 is, according to the invention, a prediction by statistical analysis. Options such as prediction by a probability density function or prediction based on Bayesian theory are not claimed. More specifically, for example, the estimating unit 154 may calculate the probability of occurrence of the operation state for each hour by statistically analyzing the operation state history extracted by the extraction unit 153 (for example, the extracted operation state history is aggregated for each hour and then normalized). Depending on the probability of occurrence, it is possible to predict the operation state of the prediction target device (plant) at a certain point in the future. Alternatively, still according to the invention, the estimating unit 154 executes machine learning using the operation state history extracted by the extraction unit 153 as learning data to generate a learning model, and input the history of the operation state of the prediction target device (plant) into the learning model to output the future operation state of the prediction target device. More specifically, for example, the estimating unit 154 may generate a learning model that inputs time-series data of the operation state history and outputs the future operation state by learning the recurrent neural network (RNN) using the operation state history extracted by the extraction unit 153 as learning data. Depending on the future operation state, it is possible to predict the operation state of the prediction target device (plant) at a certain point in the future.

The display processing unit 155 causes the display unit 13 to display various screens based on the display data of the various screens stored in the storage unit 14.

### (1-3) Plant 20

The plant 20 includes an operating unit 21, various sensors 22, a measurement control system 23, and a plant communication unit 24. The operating unit 21 includes a main device constituting the plant 20, and includes, for example, various modules such as a combustion chamber and a heat exchange chamber, a piping system connecting each module, and the like. The sensor 22 is installed in each place in the operating unit 21, detect various physical quantities of the operating unit 21, and supply the detection results to the measurement control system 23. The measurement control system 23 generates an operation state history based on the detection result supplied from the sensor 22. Specifically, the measurement control system 23 analyzes the detection result supplied from the sensor 22 to determine the operation state of the operating unit 21 on which the sensor 22 is installed, and then generates an operation state history which is a time-series change in the determined operation state. The measurement control system 23 transmits the operation state history of the operating unit 21 to the server 10 via the plant communication unit 24.

### (2) Operation Processing

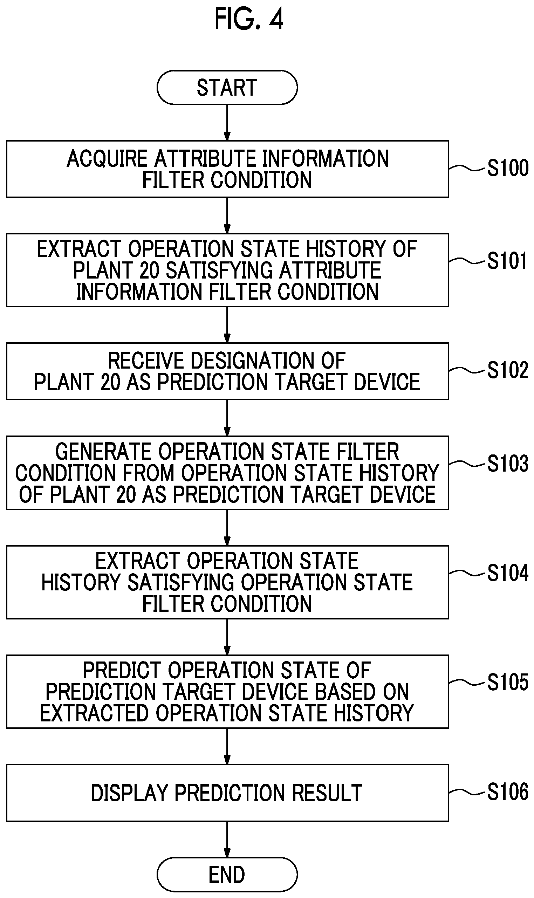

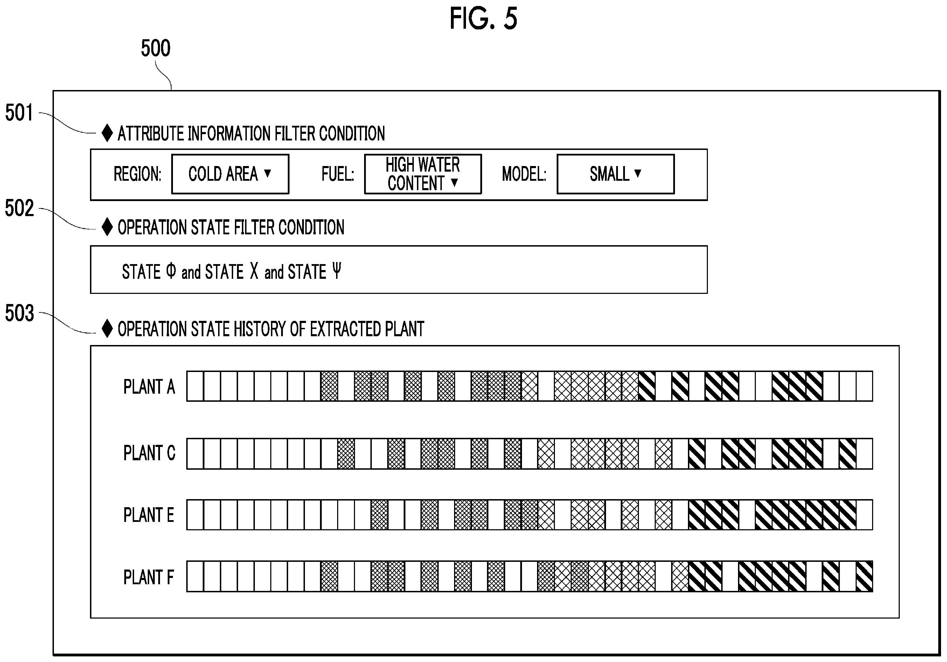

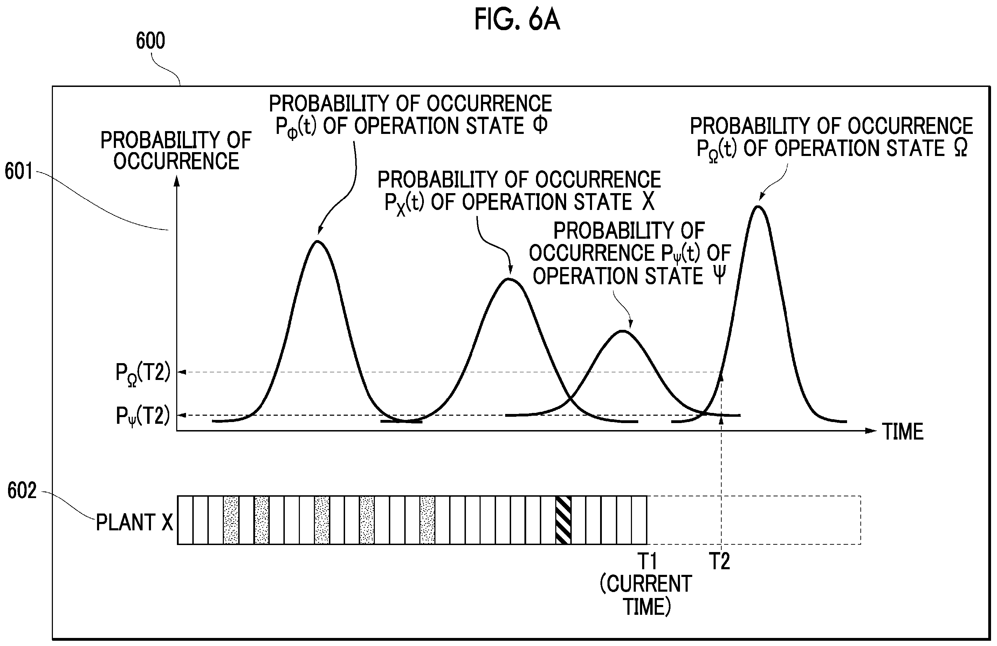

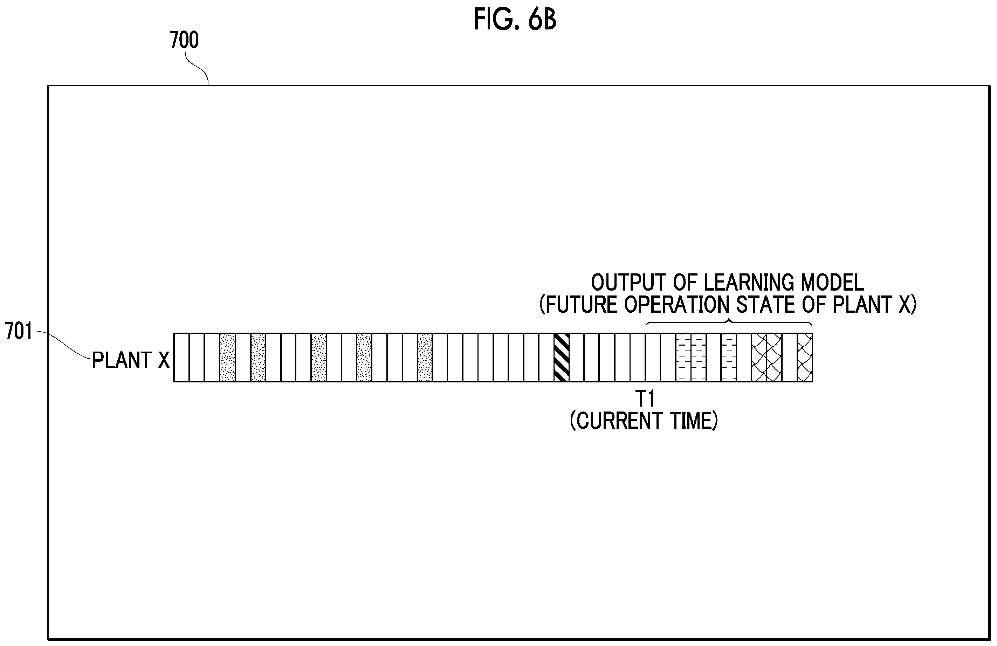

Next, an example of the operation processing of the prediction system 1 according to the embodiment will be described with reference to Figs. 4 to 6. Fig. 4 is a flow chart illustrating an example of an operation flow by the prediction system 1 according to the embodiment. Fig. 5 is a view illustrating an example of a screen 500 displayed on the display unit 13. Fig. 6 is a view illustrating an example of a screen 600 displayed on the display unit 13. Hereinafter, the individual plants 20 may be referred to as a "plant A", a "plant B", and the like.

Here, it is assumed that the time T1 has elapsed from the start-up of the plant X, and the operation state of the plant X after the time T1 is the target of the prediction. In addition, it is assumed that the collection portion 151 of the server 10 collects the operation state history of the plant 20 from each plant 20 in advance and records the operation state history in the operation state history table stored in the storage unit 14.

### (S100)

First, the first acquisition unit 152a of the server 10 acquires the attribute information filter condition. Specifically, for example, the first acquisition unit 152a acquires the attribute information filter condition by receiving the input of the attribute information filter condition in response to the operation of the operation unit 12 by the user. In this case, the display processing unit 155 of the server 10 causes the display unit 13 to display the screen 500 illustrated in Fig. 5, for example, based on the display data stored in the storage unit 14. As illustrated in Fig. 5, the screen 500 includes a display unit 501 for the attribute information filter condition, a display unit 502 for the operation state filter condition, and a display unit 503 for the operation state history of the extracted plant 20. The display unit 501 displays the content of the attribute information filter condition acquired by the first acquisition unit 152a. In the example illustrated in Fig. 5, the display unit 501 displays the attribute information filter conditions in which the region is "cold area", the fuel is "high water content", and the model is "small".

### (S101)

Next, the extraction unit 153 refers to the attribute information table stored in the storage unit 14, identifies the plant 20 that satisfies the attribute information filter condition acquired in S100, and then extracts the operation state history of the specified plant 20 from the operation state history table.

### (S102)

Next, the second acquisition unit 152b of the server 10 receives the designation of the plant 20 as the prediction target device in response to the operation of the operation unit 12 by the user. Specifically, the second acquisition unit 152b receives input of information for specifying the plant 20 specified by the user as the prediction target device (for example, name of the plant 20, identification information, and the like).

### (S103)

Next, the second acquisition unit 152b of the server 10 acquires the operation state filter condition by generating the operation state filter condition based on the operation state history of the specified plant 20 with reference to the operation state history table stored in the storage unit 14. For example, the second acquisition unit 152b may select at least one operation state included in the history of the operation state of the plant 20 as the prediction target device, and use the selected operation state as the operation state filter condition. In particular, the second acquisition unit 152b may use all the operation states included in the history of the operation state of the plant 20 as the prediction target device as the operation state filter condition.

As illustrated in Fig. 5, the display unit 502 of the screen 500 displays the content of the operation state filter condition generated by the second acquisition unit 152b. The display unit 502 displays the content of the operation state filter condition acquired by the second acquisition unit 152b. In the example illustrated in Fig. 5, " operation state Φ", "operation state X", and "operation state Ψ" are displayed on the display unit 502 as operation state filter conditions. This is because the operation state history of the plant X includes the history of "operation state Φ", "operation state X", and "operation state Ψ", respectively.

### (S104)

Next, the extraction unit 153 extracts the operation state history that satisfies the operation state filter condition generated in S103 from the operation state history extracted in S101.

As illustrated in Fig. 5, the display unit 503 of the screen 500 displays the operation state history of the plant 20 extracted as a plant satisfying the attribute information filter condition and the operation state filter condition (specifically, the operation state history of plant A, plant C, plant E, and plant F).

### (S105)

Next, the estimating unit 154 predicts the operation state of the prediction target device based on the operation state history of the plant 20 extracted in S101. Specifically, for example, the estimating unit 154 may calculate the probability of occurrence of the operation state for each hour by statistically analyzing the extracted operation state history. Alternatively, for example, the estimating unit 154 may execute machine learning using the operation state history extracted by the extraction unit 153 as learning data to generate a learning model, and input the history of the operation state of the prediction target device (plant) into the learning model to generate an output indicating the future operation state of the prediction target device (plant).

### (S106)

Next, the display processing unit 155 causes the display unit 13 to display the prediction result by the estimating unit 154, and the operation processing of the prediction system 1 is terminated.

Fig. 6A is an example of a screen 600 illustrating a prediction result displayed on the display unit 13 by the display processing unit 155 when the estimating unit 154 calculates the probability of occurrence of an operation state. As illustrated in Fig. 6A, the screen 600 includes a display unit 601 for the probability of occurrence of the operation state calculated by the estimating unit 154 and a display unit 602 for the operation state history of the prediction target device. The display unit 601 displays the time-series change of the probability of occurrence of each operation state calculated by the estimating unit 154. In the example illustrated in Fig. 6A, the probability of occurrence P_{Φ}(t) of the operation state φ, the probability of occurrence P_{X}(t) of the operation state X, the probability of occurrence P_{ψ}(t) of the operation state ψ, and the probability of occurrence P_{Ω}(t) of the operation state Ω are illustrated.

The display unit 602 displays the operation state history of the plant X, which is a prediction target device of the operation state. Specifically, the display unit 602 displays the operation state history of the plant X from the start of operation to the lapse of time T1. Here, after the time T1, it is possible to predict the specific operation state of the plant X with the probability of occurrence based on the probability of occurrence displayed on the display unit 601. In the example illustrated in Fig. 6A, in the plant X in the future time T2 (> T1), the probability of becoming the operation state Ω is P_{Ω}(T2), and the probability of becoming the operation state Ψ is P_{ψ}(T2).

Fig. 6B is an example of a screen 700 illustrating a prediction result displayed on the display unit 13 by the display processing unit 155 when the estimating unit 154 makes a prediction by a learning model by machine learning. As illustrated in Fig. 6B, the screen 700 includes a display unit 701 for time-series change of the operation state of the plant X, which is a prediction target device. The display unit 701 displays the history of the operation state of the plant X up to the current time T1. The history of the operation state of the plant X up to the current time T1 is the learning data in the machine learning executed by the estimating unit 154. Furthermore, the display unit 701 displays the future operation state as an output obtained by inputting the operation state history of the plant X into the learning model generated by the estimating unit 154 using the learning data.

In the above-described embodiment, the second acquisition unit 152b receives the designation of the plant 20 as the prediction target device (S102), and then generates the operation state filter condition based on the operation state history of the specified plant 20 (S103) to acquire the operation state filter condition. However, the second acquisition unit 152b may acquire the operation state filter condition input by the user, for example, by operating the operation unit 12.

### Reference Signs List

- 1: prediction system
- 10: server
- 11: server communication unit
- 12: operation unit
- 13: display unit
- 14: storage unit
- 15: processing unit
- 151: collection portion
- 152a: first acquisition unit
- 152b: second acquisition unit
- 153: extraction unit
- 154: estimating unit
- 155: display processing unit
- 20, 20A, 20B, 20C: plant
- 21: operating unit
- 22: sensor
- 23: measurement control system
- 24: plant communication unit

## Claims

1. A prediction system (1) comprising:
a storage unit (14) configured to store
a history of an operation state of each of a plurality of target devices (20) and attribute information indicating an attribute of each of the plurality of target devices (20);
a first acquisition unit (152a) configured to acquire an attribute information filter condition
in which at least one attribute information included in attribute information of a prediction target device is specified;
a second acquisition unit (152b) configured to acquire an operation state filter condition
in which at least one operation state included in a history of an operation state of the prediction target device is specified;
an extraction unit (153) configured to extract a history of an operation state of a target device (20)
satisfying the attribute information filter condition and the operation state filter condition
from the stored history of the operation state and the stored attribute information of each of the plurality of target devices (20), with reference to the storage unit (14);
an estimating unit (154) configured to predict an operation state of the prediction target device based on the extracted history of the operation state
by statistically analyzing the extracted history of the operation state, or
by executing machine learning in which the extracted history of the operation state is used as learning data to generate a learning model and a history of the operation state of the prediction target device is input into the learning model; and
a display processing unit (155) configured to cause the display of the prediction result by the estimating unit (154);
**characterized in that**
the extraction unit (153) is configured to extract the history of the operation state of the target device (20) satisfying the operation state filter condition,
when duration time of the operation state specified as the operation state filter condition is equal to or longer than a predetermined threshold.

2. The prediction system (1) according to claim 1, wherein
the first acquisition unit (152a) is configured to acquire the attribute information filter condition by receiving an input of the attribute information filter condition.

3. The prediction system (1) according to claim 1 or 2, wherein
the second acquisition unit (152b) is configured to receive a designation of the prediction target device and generate the operation state filter condition based on the history of the operation state of the prediction target device stored in the storage unit (14).

4. The prediction system (1) according to claim 1 or 2, wherein
the second acquisition unit (152b) is configured to acquire the attribute information filter condition by receiving an input of the operation state filter condition.

5. The prediction system (1) according to any one of claims 1 to 4, wherein
the estimating unit (154) is configured to calculate a probability of occurrence of the operation state satisfying the operation state filter condition by statistically analyzing the extracted history of the operation state.

6. The prediction system (1) according to claim 5, further comprising:
a display unit (13) configured to display the probability of occurrence calculated by the estimating unit (154).

7. The prediction system (1) according to any one of claims 1 to 4, wherein
the estimating unit (154) is configured to output a future operation state of the prediction target device by executing the machine learning.

8. The prediction system (1) according to claim 7, further comprising:
a display unit (13) configured to display the output future operation state of the prediction target device.

9. The prediction system (1) according to any one of claims 1 to 8, wherein
a plurality of operation states are specified in the operation state filter condition, and
the operation state filter condition includes an order of occurrence of the plurality of operation states.

10. The prediction system (1) according to any one of claims 1 to 9, wherein
the target device (20) is a plant.

11. The prediction system (1) according to any one of claims 1 to 9, wherein
the target device (20) is a boiler.

12. A method for causing an information processing device
including a storage unit (14) that
stores a history of an operation state of each of a plurality of target devices (20) and
attribute information indicating an attribute of each of the plurality of target devices (20)
to execute
a step of acquiring an attribute information filter condition
in which at least one attribute information included in attribute information of a prediction target device is specified;
a step of acquiring an operation state filter condition
in which at least one operation state included in a history of an operation state of the prediction target device is specified;
a step of extracting a history of an operation state of a target device (20)
satisfying the attribute information filter condition and the operation state filter condition of the plurality of target devices (20)
from the stored history of the operation state and the stored attribute information of each of the plurality of target devices (20), with reference to the storage unit (14);
a step of predicting an operation state of the prediction target device based on the extracted history of the operation state
by statistically analyzing the extracted history of the operation state or
by executing machine learning in which the extracted history of the operation state as learning data is used to generate a learning model and a history of the operation state of the prediction target device is input into the learning model; and
a step of displaying the prediction result;
**characterized in that**
in the step of extracting the history of the operation state of the target device (20), the history of the operation state of the target device (20) is extracted as satisfying the operation state filter condition,
when duration time of the operation state specified as the operation state filter condition is equal to or longer than a predetermined threshold.

13. A program for causing an information processing device including a storage unit (14) that stores a history of an operation state of each of a plurality of target devices (20) and attribute information indicating an attribute of each of the plurality of target devices (20) to execute the method of claim 12.

## Patentansprüche

1. Vorhersagesystem (1) umfassend:
eine Speichereinheit (14), die konfiguriert ist,
einen Verlauf eines Betriebszustands von jedem von mehreren Zielvorrichtungen (20) und Attributinformationen, die ein Attribut von jedem der mehreren Zielvorrichtungen (20) anzeigen, zu speichern;
eine erste Erfassungseinheit (152a), die konfiguriert ist,
eine Attributinformationsfilterbedingung zu erfassen,
in der mindestens eine Attributinformation, die in den Attributinformationen einer Vorhersagezielvorrichtung enthalten ist, spezifiziert ist;
eine zweite Erfassungseinheit (152b), die konfiguriert ist,
eine Betriebszustandsfilterbedingung zu erfassen,
in der mindestens ein Betriebszustand, der in einem Verlauf eines Betriebszustands der Vorhersagezielvorrichtung enthalten ist, spezifiziert ist;
eine Extraktionseinheit (153), die konfiguriert ist, einen Verlauf eines Betriebszustands einer Zielvorrichtung (20) zu extrahieren,
die die Attributinformationsfilterbedingung und die Betriebszustandsfilterbedingung, die aus dem gespeicherten Verlauf des Betriebszustands und den gespeicherten Attributinformationen von jedem der mehreren Zielvorrichtungen (20) unter Bezugnahme auf die Speichereinheit (14) erfüllt;
eine Schätzeinheit (154), die konfiguriert ist, einen Betriebszustand der Vorhersagezielvorrichtung auf Grundlage des extrahierten Verlaufs des Betriebszustands vorauszusagen,
durch statistische Analyse des extrahierten Verlaufs des Betriebszustands oder
durch Ausführen von maschinellem Lernen, bei dem der extrahierte Verlauf des Betriebszustands als Lerndaten verwendet wird, um ein Lernmodell zu erzeugen, und einen Verlauf des Betriebszustands der Vorhersagezielvorrichtung in das Lernmodell eingegeben wird; und
eine Anzeigeverarbeitungseinheit (155), die konfiguriert ist, die Anzeige des Vorhersageergebnisses durch die Schätzeinheit (154) zu bewirken;
**dadurch gekennzeichnet, dass**
die Extraktionseinheit (153) konfiguriert ist, den Verlauf des Betriebszustands der Zielvorrichtung (20) zu extrahieren, der die Betriebszustandsfilterbedingung erfüllt,
wenn die Dauer des Betriebszustands, der als Betriebszustandsfilterbedingung angegeben ist, gleich oder länger als ein vorbestimmter Schwellenwert ist.

2. Vorhersagesystem (1) nach Anspruch 1, wobei
die erste Erfassungseinheit (152a) konfiguriert ist, die Attributinformationsfilterbedingung zu erfassen, indem sie eine Eingabe der Attributinformationsfilterbedingung empfängt.

3. Vorhersagesystem (1) nach Anspruch 1 oder 2, wobei
die zweite Erfassungseinheit (152b) konfiguriert ist, eine Bezeichnung der Vorhersagezielvorrichtung zu empfangen und die Betriebszustandsfilterbedingung auf der Grundlage des in der Speichereinheit (14) gespeicherten Verlaufs des Betriebszustands der Vorhersagezielvorrichtung zu erzeugen.

4. Vorhersagesystem (1) nach Anspruch 1 oder 2, wobei
die zweite Erfassungseinheit (152b) konfiguriert ist, die Attributinformationsfilterbedingung zu erfassen, indem sie eine Eingabe der Betriebszustandsfilterbedingung empfängt.

5. Vorhersagesystem (1) nach einem der Ansprüche 1 bis 4, wobei
die Schätzeinheit (154) konfiguriert ist, eine Wahrscheinlichkeit des Auftretens des Betriebszustands zu kalkulieren, der die Betriebszustandsfilterbedingung erfüllt, durch statistische Analyse des extrahierten Verlaufs des Betriebszustands.

6. Vorhersagesystem (1) nach Anspruch 5, ferner umfassend:
eine Anzeigeeinheit (13), die konfiguriert ist, die von der Schätzeinheit (154) berechnete Eintrittswahrscheinlichkeit anzuzeigen.

7. Vorhersagesystem (1) nach einem der Ansprüche 1 bis 4, wobei
die Schätzeinheit (154) konfiguriert ist, einen zukünftigen Betriebszustand der Vorhersagezielvorrichtung durch Ausführen des maschinellen Lernens auszugeben.

8. Vorhersagesystem (1) nach Anspruch 7, ferner umfassend:
eine Anzeigeeinheit (13), die konfiguriert ist, den ausgegebenen zukünftigen Betriebszustand der Vorhersagezielvorrichtung anzuzeigen.

9. Vorhersagesystem (1) nach einem der Ansprüche 1 bis 8, wobei
mehrere Betriebszustände in der
Betriebszustandsfilterbedingung spezifiziert sind und
die Betriebszustandsfilterbedingung eine Reihenfolge des Auftretens der mehreren Betriebszustände umfasst.

10. Vorhersagesystem (1) nach einem der Ansprüche 1 bis 9, wobei
die Zielvorrichtung (20) eine Anlage ist.

11. Vorhersagesystem (1) nach einem der Ansprüche 1 bis 9, wobei
die Zielvorrichtung (20) ein Kessel ist.

12. Verfahren zum Veranlassen einer Informationsverarbeitungsvorrichtung
einschließlich einer Speichereinheit (14), die
einen Verlauf eines Betriebszustands von jeder von mehreren Zielvorrichtungen (20) und Attributinformationen, die ein Attribut jeder der mehreren Zielvorrichtungen (20) angeben, speichert, um
einen Schritt zum Erfassen einer Attributinformationsfilterbedingung auszuführen,
in der mindestens eine Attributinformation, die in den Attributinformationen einer Vorhersagezielvorrichtung enthalten ist, spezifiziert ist;
einen Schritt des Erfassens einer
Betriebszustandsfilterbedingung,
in der mindestens ein Betriebszustand, der in einem Verlauf eines Betriebszustands des Vorhersagezielgeräts enthalten ist, spezifiziert wird;
einen Schritt des Extrahierens eines Verlaufs eines Betriebszustands einer Zielvorrichtung (20),
der die Attributinformationsfilterbedingung und die Betriebszustandsfilterbedingung der mehreren Zielgeräte (20) aus dem gespeicherten Verlauf des Betriebszustands und den gespeicherten Attributinformationen jeder der mehreren Zielvorrichtungen (20) unter Bezugnahme auf die Speichereinheit (14) erfüllt;
einen Schritt des Vorhersagens eines Betriebszustands der Vorhersagezielvorrichtung auf Grundlage des extrahierten Verlaufs des Betriebszustands
durch statistische Analyse des extrahierten Verlaufs des Betriebszustands oder
durch Ausführen maschinellen Lernens, bei dem der extrahierte Verlauf des Betriebszustands als Lerndaten zum Erzeugen eines Lernmodells verwendet wird, und ein Verlauf des Betriebszustands der Vorhersagezielvorrichtung in das Lernmodell eingegeben wird; und
einen Schritt des Anzeigens des Vorhersageergebnisses ; **dadurch gekennzeichnet, dass**
in dem Schritt des Extrahierens des Verlaufs des Betriebszustands der Zielvorrichtung (20) der Verlauf des Betriebszustands der Zielvorrichtung (20) als die Betriebszustandsfilterbedingung erfüllend extrahiert wird,
wenn Dauer des als Betriebszustandsfilterbedingung spezifizierten Betriebszustands gleich oder länger als ein vorbestimmter Schwellenwert ist.

13. Programm zum Veranlassen einer Informationsverarbeitungsvorrichtung umfassend eine Speichereinheit (14), die einen Verlauf eines Betriebszustands von jeder von mehreren Zielvorrichtungen (20) und Attributinformationen, die ein Attribut von jeder der mehreren Zielvorrichtungen (20) angeben, speichert, um das Verfahren nach Anspruch 12 auszuführen.

## Revendications

1. Un système de prédiction (1), comprenant :
une unité de stockage (14) configurée pour stocker un historique d'un état de fonctionnement de chacun d'une pluralité de dispositifs cibles (20) et des informations d'attribut indiquant un attribut de chacun de la pluralité de dispositifs cibles (20) ;
une première unité d'acquisition (152a) configurée pour acquérir une condition de filtrage d'informations d'attribut dans laquelle au moins une information d'attribut incluse dans les informations d'attribut d'un dispositif cible de prédiction est spécifiée ;
une deuxième unité d'acquisition (152b) configurée pour acquérir une condition de filtrage d'état de fonctionnement dans laquelle au moins un état de fonctionnement inclus dans un historique d'un état de fonctionnement du dispositif cible de prédiction est spécifié ;
une unité d'extraction (153) configurée pour extraire un historique d'un état de fonctionnement d'un dispositif cible (20) satisfaisant la condition de filtrage d'informations d'attribut et la condition de filtrage d'état de fonctionnement, à partir de l'historique stocké de l'état de fonctionnement et des informations d'attribut stockées de chacun de la pluralité de dispositifs cibles (20), en référence à l'unité de stockage (14) ;
une unité d'estimation (154) configurée pour prédire un état de fonctionnement du dispositif cible de prédiction sur la base de l'historique extrait de l'état de fonctionnement,
en analysant statistiquement l'historique extrait de l'état de fonctionnement, ou
en exécutant un apprentissage automatique dans lequel l'historique extrait de l'état de fonctionnement est utilisé en tant que des données d'apprentissage pour générer un modèle d'apprentissage, et un historique de l'état de fonctionnement du dispositif cible de prédiction est appliqué en entrée dans le modèle d'apprentissage ; et
une unité de traitement d'affichage (155) configurée pour occasionner l'affichage du résultat de prédiction donné par l'unité d'estimation (154) ;
**caractérisé en ce que**
l'unité d'extraction (153) est configurée pour extraire l'historique de l'état de fonctionnement du dispositif cible (20) satisfaisant la condition de filtrage d'état de fonctionnement, lorsqu'une durée temporelle de l'état de fonctionnement spécifié en tant que la condition de filtrage d'état de fonctionnement est égale ou supérieure à un seuil prédéterminé.

2. Le système de prédiction (1) selon la revendication 1, dans lequel
la première unité d'acquisition (152a) est configurée pour acquérir la condition de filtrage d'informations d'attribut en recevant une entrée de la condition de filtrage d'informations d'attribut.

3. Le système de prédiction (1) selon la revendication 1 ou 2, dans lequel
la deuxième unité d'acquisition (152b) est configurée pour recevoir une désignation du dispositif cible de prédiction, et pour générer la condition de filtrage d'état de fonctionnement sur la base de l'historique de l'état de fonctionnement du dispositif cible de prédiction stocké dans l'unité de stockage (14).

4. Le système de prédiction (1) selon la revendication 1 ou 2, dans lequel
la deuxième unité d'acquisition (152b) est configurée pour acquérir la condition de filtrage d'informations d'attribut en recevant une entrée de la condition de filtrage d'état de fonctionnement.

5. Le système de prédiction (1) selon l'une quelconque des revendications 1 à 4, dans lequel
l'unité d'estimation (154) est configurée pour calculer une probabilité d'occurrence de l'état de fonctionnement satisfaisant la condition de filtrage d'état de fonctionnement en analysant statistiquement l'historique extrait de l'état de fonctionnement.

6. Le système de prédiction (1) selon la revendication 5, comprenant en outre :
une unité d'affichage (13) configurée pour afficher la probabilité d'occurrence calculée par l'unité d'estimation (154).

7. Le système de prédiction (1) selon l'une quelconque des revendications 1 à 4, dans lequel
l'unité d'estimation (154) est configurée pour fournir en sortie un état de fonctionnement futur du dispositif cible de prédiction en exécutant l'apprentissage automatique.

8. Le système de prédiction (1) selon la revendication 7, comprenant en outre :
une unité d'affichage (13) configurée pour afficher l'état de fonctionnement futur fourni en sortie du dispositif cible de prédiction.

9. Le système de prédiction (1) selon l'une quelconque des revendications 1 à 8, dans lequel
une pluralité d'états de fonctionnement sont spécifiés dans la condition de filtrage d'état de fonctionnement, et
la condition de filtrage d'état de fonctionnement comprend un ordre d'occurrence de la pluralité d'états de fonctionnement.

10. Le système de prédiction (1) selon l'une quelconque des revendications 1 à 9, dans lequel
le dispositif cible (20) est une usine.

11. Le système de prédiction (1) selon l'une quelconque des revendications 1 à 9, dans lequel
le dispositif cible (20) est une chaudière.

12. Une méthode pour amener un dispositif de traitement d'informations comprenant une unité de stockage (14) qui
stocke un historique d'un état de fonctionnement de chacun d'une pluralité de dispositifs cibles (20) et
des informations d'attribut indiquant un attribut de chacun de la pluralité de dispositifs cibles (20) à exécuter :
une étape consistant à acquérir une condition de filtrage d'informations d'attribut
dans laquelle au moins une information d'attribut incluse dans les informations d'attribut d'un dispositif cible de prédiction est spécifiée ;
une étape consistant à acquérir une condition de filtrage d'état de fonctionnement
dans laquelle au moins un état de fonctionnement inclus dans un historique d'un état de fonctionnement du dispositif cible de prédiction est spécifié ;
une étape consistant à extraire un historique d'un état de fonctionnement d'un dispositif cible (20)
satisfaisant la condition de filtrage d'informations d'attribut et la condition de filtrage d'état de fonctionnement de la pluralité de dispositifs cibles (20),
à partir de l'historique stocké de l'état de fonctionnement et des informations d'attribut stockées de chacun de la pluralité de dispositifs cibles (20), en référence à l'unité de stockage (14) ;
une étape consistant à prédire un état de fonctionnement du dispositif cible de prédiction sur la base de l'historique extrait de l'état de fonctionnement,
en analysant statistiquement l'historique extrait de l'état de fonctionnement, ou
en exécutant un apprentissage automatique dans lequel l'historique extrait de l'état de fonctionnement est utilisé en tant que des données d'apprentissage pour générer un modèle d'apprentissage, et un historique de l'état de fonctionnement du dispositif cible de prédiction est appliqué en entrée dans le modèle d'apprentissage ; et
une étape consistant à afficher le résultat de prédiction ;
**caractérisé en ce que**,
dans l'étape d'extraction de l'historique de l'état de fonctionnement du dispositif cible (20), l'historique de l'état de fonctionnement du dispositif cible (20) est extrait comme satisfaisant la condition de filtrage d'état de fonctionnement,
lorsqu'une durée temporelle de l'état de fonctionnement spécifié en tant que la condition de filtrage d'état de fonctionnement est égale ou supérieure à un seuil prédéterminé.

13. Un programme destiné à amener un dispositif de traitement d'informations, comprenant une unité de stockage (14) qui stocke un historique d'un état de fonctionnement de chacun d'une pluralité de dispositifs cibles (20), et des informations d'attribut indiquant un attribut de chacun de la pluralité de dispositifs cibles (20), à exécuter le procédé selon la revendication 12.
